(19) Europäisches Patentamt
European Patent Office
Office européen des brevets

(11) EP 0 809 824 B1

## (12) EUROPÄISCHE PATENTSCHRIFT

(45) Veröffentlichungstag und Bekanntmachung des Hinweises auf die Patenterteilung:
**18.11.1998 Patentblatt 1998/47**

(51) Int Cl.⁶: **G05D 23/13**

(21) Anmeldenummer: **96902261.5**

(22) Anmeldetag: **31.01.1996**

(86) Internationale Anmeldenummer:
**PCT/EP96/00388**

(87) Internationale Veröffentlichungsnummer:
**WO 96/25695 (22.08.1996 Gazette 1996/38)**

(54) **THERMOSTATEINRICHTUNG FÜR EINE SANITÄRE MISCHBATTERIE**

THERMOSTATIC DEVICE FOR MIXER TAPS

DISPOSITIF THERMOSTATIQUE POUR ROBINET MITIGEUR

(84) Benannte Vertragsstaaten:
**BE DE ES FR IT LU NL SE**

(30) Priorität: **16.02.1995 DE 19505120**
**20.04.1995 DE 19514558**

(43) Veröffentlichungstag der Anmeldung:
**03.12.1997 Patentblatt 1997/49**

(73) Patentinhaber: **IDEAL-STANDARD GMBH**
**53121 Bonn (DE)**

(72) Erfinder: **BERGMANN, Konrad**
**D-54338 Schweich (DE)**

(74) Vertreter: **Gesthuysen, Hans Dieter, Dipl.-Ing.**
**Patentanwälte**
**Gesthuysen, von Rohr, Weidener, Häckel,**
**Postfach 10 13 54**
**45013 Essen (DE)**

(56) Entgegenhaltungen:
EP-A- 0 448 315          EP-A- 0 498 710
CH-A- 356 969            CH-A- 384 490
DE-B- 1 072 852          DE-B- 1 098 777

## Beschreibung

Die Erfindung betrifft eine Thermostateinrichtung für eine sanitäre Mischbatterie nach dem Oberbegriff des Anspruchs 1 sowie eine Mischbatterie mit einer Tehrmostateinrichtung in der zuvor genannten Art.

Eine sanitäre Mischbatterie mit einer Thermostateinrichtung der eingangs genannten Art sowie eine derartige Thermostateinrichtung an sich sind aus der EP-A-0 448 315 bereits bekannt. Die Thermostateinrichtung ist dabei üblicherweise mit einem mechanischen Verstellglied versehen, bei dem es sich in der Regel um ein Wachselement oder ein Bi-metall handeln kann. Das Verstellglied hat entsprechend seiner Ausführung bestimm-e Eigenschaften, zu denen unter anderem gehören:

- Ausdehnung bei Temperaturänderung

- Eigenelastizität

- Zeitverhalten

- Totzeiten bis zum ersten Ansprechen.

Bei sanitären Mischbatterien ist grundsätzlich eine hohe Genauigkeit und eine hohe Regelgeschwindigkeit erwünscht. Um dies zu erreichen, soll das Verstellglied eine hohe Ausdehnung bei gleichzeitig gutem Zeitverhalten haben. Allerdings führen hohe Ausdehnungswerte in Verbindung mit Totzeiten zu Oszillationen des Regelkörpers. Derartige Oszillationen beeinflussen nachteilig die Genauigkeit und die Regelgeschwindigkeit der Mischbatterie.

Die Erfindung geht einen neuen Weg und vermeidet die vorgenannten Nachteile. Erfindungsgemäß ist nun vorgesehen, daß die Federkennlinie des Rückstellfederelements derart ausgebildet ist, daß die Federkraft im Belastungsbereich bei Ausdehnung des Verstellgliedes und gleichzeitiger Zusammendrückung des Rückstellfederelementes ausgehend von der Mittelstellung in Richtung auf die Grenzlage des Belastungsbereichs zunächst zumindest nicht ansteigt.

Da die von der Rückstellfeder erzeugte Gegenkraft bei Ausdehnung des Verstellelementes nicht ansteigt, wie dies beim Stand der Technik beispielsweise bei Verwendung einer bekannten Schraubenfeder üblich ist. kann sich das Verstellglied leichter und besser ausdehnen und zwar ohne daß eine Veränderung am Verstellglied erforderlich ist. Somit sind auch die Totzeiten bis zum Ansprechen geringer. Daraus resultiert, daß sich eine höhere Genauigkeit der Regelung insgesamt ergibt. Darüber hinaus ist festgestellt worden, daß die Tendenz zu Oszillationen bei Verwendung eines Rückstellfederelements mit der erfindungsgemäßen Federkennlinie verringert wird.

Neben der größeren Ausdehnung des Verstellgliedes, erhöhten Genauigkeit und der verminderten Tendenz zu Oszillationen ergeben sich aber noch eine Reihe weiterer zum Teil erheblicher Vorteile. Aufgrund der verbesserten Genauigkeit und Ansprechgeschwindigkeit ist es gleichzeitig möglich. die Größe der Durchlaßschlitze zwischen dem Regelkörper bzw. den Kaltwasser- bzw. Warmwassersteuerkanten und korrespondierenden Ventilsitzen am Gehäuse der Mischbatterie zu vergrößern. Dies würde unmittelbar eine Erhöhung der maximalen Durchflußmenge nach sich ziehen. Soll die Durchflußmenge gleich gehalten werden, könnte ohne weiteres der äußere Durchmesser des Regelkörpers verkleinert und somit die Abmaße der Thermostateinrichtung bzw. der sanitären Mischbatterie insgesamt verkleinert werden.

Zusammenfassend kann somit festgestellt werden daß es durch die Erfindung möglich ist, je nach gewünschter Charakteristik.

- die Genauigkeit der Regelung.

- den Durchfluß,

- die Spaltgröße des Reglers oder

- die Baugröße der Mischbatterie

zu optimieren.

Der erfindungsgemäße Effekt und die damit verbundenen Vorteile ergeben sich insbesondere dann, wenn die Federkraft des Rückstellfederelements bei Ausdehnung des Verstellgliedes, ausgehend von der Mittelstellung, im Belastungsbereich zunächst sinkt. Durch die Abnahme der Federkraft bei Ausdehnung des Verstellgliedes wird diesem zumindest im Bereich der Mittelstellung eine vergleichsweise geringe Gegenkraft des Rückstellfederelements entgegengebracht, was die Ausdehnung des Verstellgliedes begünstigt.

Von ganz besonderem Vorteil ist es, wenn die Federkennlinie im Belastungsbereich einen degressiven Verlauf hat und wenn die Degressivität im Bereich der Mittelstellung am größten ist. Hierdurch wird sichergestellt. daß die Federkraft des Rückstellfederelements gerade in dem häufig beanspruchten Teil des Belastungsbereichs, der an die Mittelstellung angrenzt, auch bei geringer Ausdehnung des Verstellgliedes sofort stark abfällt. Die verminderte Federkraft und insbesondere die degressive Ausbildung der Federkennlinie bewirken, daß bei einer Ausdehnung des Verstellelementes sogleich die Gegenkraft des Rückstellfederelements sinkt. Wegen der Eigenelastizität des Verstellelementes ergibt sich dann eine zusätzliche Expansion des Verstellgliedes, wobei in Form von Federarbeit gespeicherte Energie freigesetzt wird.

Bei Versuchen ist festgestellt worden, daß ausgesprochen gute Ergebnisse hinsichtlich der Genauigkeit der Regelung, der Durchflußmenge und der Spaltgröße des Regelkörpers erzielt werden, wenn der Federkennwert des Rückstellfederelements in der Mittelstellung negativ und betragsmäßig am größten ist. Dabei sollten die Federkennwerte ausgehend von der Mittelstellung über den Federweg näherungsweise in Form einer Parabel ansteigen, bis sie zu den Grenzlagen hin positiv werden. Im Bereich der Grenzlagen betragen die Federkennwerte etwa null.

Erfindungsgemäß ist weiterhin festgestellt worden, daß sich als Rückstellfederelement besonders gut eine Metallmembrane eignet, die günstigerweise auf etwa 55 N vorgespannt ist. Diese kann dann gleichzeitig die Abdichtung zwischen den Zuläufen von Heiß- und Kaltwasser übernehmen.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder deren Rückbeziehung.

Es zeigt

Fig. 1    die Federkennlinie eines Rückstellfederelements für eine erfindungsgemäße Thermostateinrichtung,

Fig. 2    die Kurve der Federkennwerte des Rückstellfederelements aus Fig. 1 und

Fig. 3    die graphische Darstellung der Verbesserung der Geschwindigkeiten und der Genauigkeit als Funktion des Federweges des Rückstellfederelements.

Nicht dargestellt ist vorliegend die sanitäre Mischbatterie bzw. die Thermostateinrichtung mit ihren konstruktiven Bauteilen. Die Thermostateinrichtung ist - wie im Stand der Technik üblich - mit einem Regelkörper versehen, der zwischen zwei Grenzlagen 2, 3 hin und her bewegbar ist. Der Regelkörper weist eine Kaltwassersteuerkante und eine Warmwassersteuerkante auf, die jeweils mit entsprechenden Ventilsitzen beispielsweise am Gehäuse der Mischbatterie bzw. einer Mischkartusche zusammenwirken. Zudem weist der Regelkörper ein Verstellglied auf, bei dem es sich beispielsweise um ein Wachselement oder ein Bimetall handelt. Außerdem ist dem Regelkörper eine Rückstelleinrichtung als Teil der sanitären Mischbatterie zugeordnet, die wiederum ein Rückstellfederelement aufweist. Das Rückstellfederelement wirkt beim Betrieb der Thermostateinrichtung mit dem Verstellglied zusammen. Dieses Zusammenwirken erfolgt dabei derart, daß beim Ausdehnen des Verstellgliedes das Rückstellfederelement belastet wird. während es beim Zusammenziehen des Verstellgliedes entlastet wird.

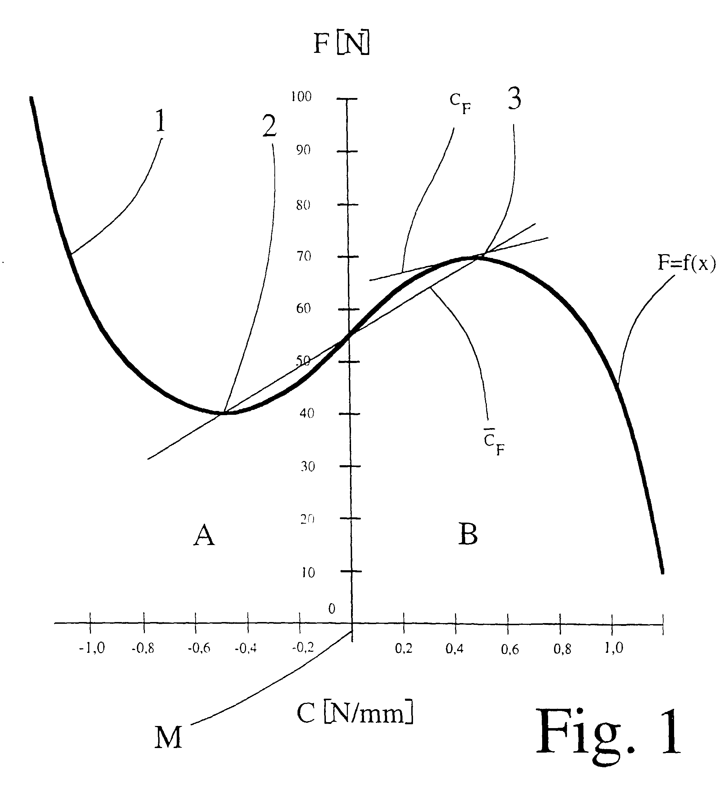

In Fig. 1 ist nun die Federkennlinie 1 F = f (x) des erfindungsgemäßen Rückstellfederelements der Thermostateinrichtung dargestellt. In der Darstellung gemäß Fig. 1 ist die Federkraft F in Newton als Ordinate gegen den Federweg x in Millimetern als Abszisse dargestellt. Im eingebauten Zustand des Rückstellfederelements ist dieses in der Mittelstellung M des Regelkörpers auf Druck belastet, nämlich mit ca. 55 N vorgespannt. Die Mittelstellung M liegt bei einem Federweg von x = 0. Bei Ausdehnung des Verstellgliedes geht die Federkennlinie 1 ausgehend von der Mittelstellung M bei x = 0 in einen Belastungsbereich A über, das Rückstellfederelement wird also gegenüber der schon vorgespannten Mittelstellung M noch weiter gespannt. Beim Zusammenziehen des Verstellgliedes geht die Federkennlinie 1. ausgehend von der Mittelstellung M, in einen Entlastungsbereich B über.

Ganz wesentlich ist nun, daß die Federkennlinie 1 derart ausgebildet ist, daß die Federkraft F im Belastungsbereich A bei Ausdehnung des Verstellgliedes ausgehend von der Mittelstellung M degressiv sinkt. Die Werte der Federkennlinie 1 sind in Tabelle 1 angegeben.

Tabelle 1:

| F = f (x) | | | | | | | |
|---|---|---|---|---|---|---|---|
| x | -0,6 | -0,5 | -0,4 | -0,3 | -0,2 | -0,1 | 0 |
| F | 42 | 40 | 41 | 43 | 46 | 50 | 55 |

Wie aus Fig. 1 erkennbar ist, schließt sich an die Grenzlage 2 bei einem Federweg von x = -0,5 mm ein Bereich mit progressiver Kennlinie an. Grundsätzlich sollte darauf geachtet werden, daß die Grenzlagen bzw. die Spaltweite so gewählt werden, daß sich die Grenzlagen noch im degressiven Bereich der Federkennlinie 1 befinden.

Im Entlastungsbereich B hat die Federkenninie 1 ebenfalls ein degressiven Verlauf bis zum Erreichen der Grenzlage 3. Anschließend fällt die Federkennlinie 1 ab und erreicht bei einem Federweg von $x_0$ = 1,2 mm etwa ihren entspannten Zustand.

Weiterhin ist in Fig. 1 die örtliche Steigung $C_F$ als Tangente an die Federkennlinie 1 dargestellt, sowie die durchschnittliche Steigung $\overline{C}_F$, die durch beide Grenzlagen 2, 3 geht.

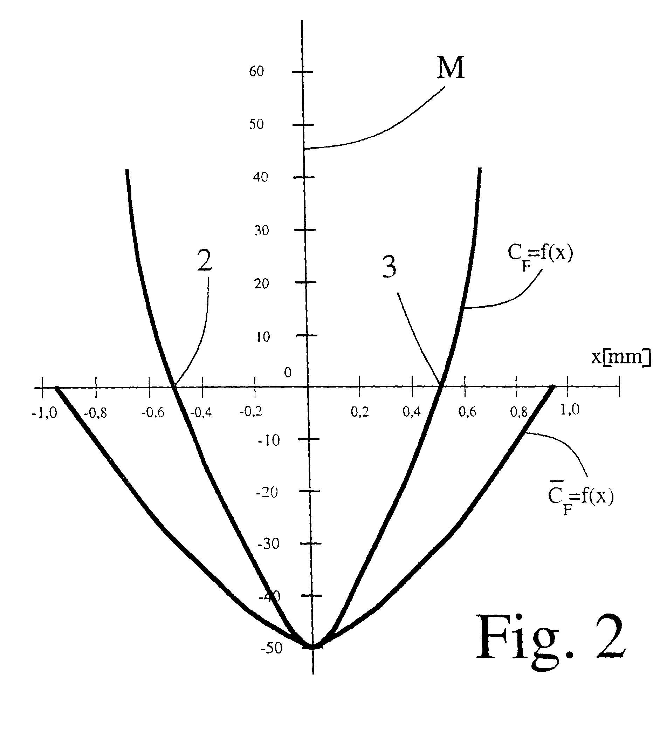

In Fig. 2 sind die Federkennwerte C in N/mm auf der Ordinate gegen den Federweg x in mm aufgetragen. Dargestellt ist in Fig. 2 einerseits die Kurve der lokalen Federkennwerte $C_F$ = f (x), andererseits die Kurve der durchschnittlichen Steigung der Federkennlinie $\overline{C}_F$ = f (x). Beide Kurven $C_F$ = f (x) und $\overline{C}_F$ = f (x) haben die Form einer Parabel. Der maximale Federkennwert $C_{max}$ liegt jeweils in der Mittelstellung M und hat einen Wert von $C_{max}$ = -50 N/mm. In den Grenzlagen 2, 3 sind die Federkennwerte der Kurve $C_F$ = f (x) jeweils null. Die einzelnen Werte der Kurven $C_F$ = f (x) und $\overline{C}_F$ = f (x) sind in den folgenden Tabellen 2 und 3 angegeben.

| x | -0.6 | -0.5 | -0,4 | -0.3 | -0,2 | -0,1 | 0 |
|---|------|------|------|------|------|------|---|
| $C_F$ | 15 | 0 | -14 | -25 | -33 | -45 | -50 |

Tabelle 2:

| CF = f (x) | | | | | | | |
|---|------|------|------|------|------|------|------|
| x | 0,1 | 0,2 | 0,3 | 0,4 | 0,5 | 0,6 | 1,2 |
| $C_F$ | -4.5 | -3,3 | -2,5 | -14 | 0 | 15 | 350 |

Tabelle 3:

| $\overline{C}_F$ = f(x) | | | | | | | |
|---|------|------|------|------|------|------|------|
| + x | 0.1 | 0.2 | 0,3 | 0,4 | 0.5 | 0.6 | 0,95 |
| $\overline{C}_F$ | -50 | -45 | -40 | -35 | -30 | -25 | 0 |

Die in den Fig. 1 und 2 dargestellten Kurven sind bei einem als Metallmembrane ausgebildeten Rückstellfederelement ermittelt worden, das gleichzeitig zwischen den Zuläufen von Heiß- und Kaltwasser abdichtet.

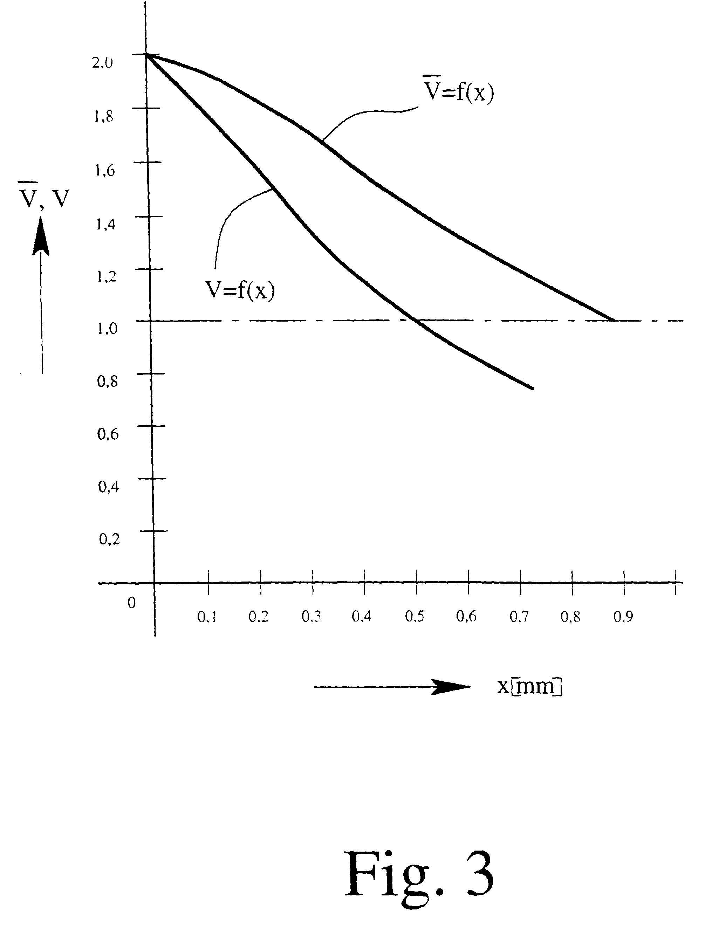

In Fig. 3 ist die Verbesserung der Geschwindigkeit V bzw. der Genauigkeit $\overline{V}$ als relative Größe auf der Ordinate gegenüber dem Federweg x in mm aufgetragen. Hierbei stellt der Wert V = 1 den Wert eines typischen Thermostaten dar. Die Kurve V = f (x) gibt die Verbesserung der Geschwindigkeit, die Kurve $\overline{V}$ = f (x) die Verbesserung der Genauigkeit jeweils bei einem bestimmten Federweg x an. Die einzelnen Werte der lokalen Verbesserung der Geschwindigkeit im Vergleich zu einem bekannten System aus Wachselement und Rückstellfeder sind durch folgende Gleichung berechnet worden:

$$V = f(x) = \frac{1}{1 - \dfrac{CF(x)}{C_W}}$$

Hierbei ist Cw die Federkonstante des Wachselementes. Der Federkennwert ist hierbei mit $C_W$ = -100 N/mm angenommen worden.

Die Geschwindigkeit V ist maßgeblich für eine schnelle Reaktion einerseits und Oszillationen andererseits. Oszillationen treten bei herkömmlichen Thermostateinrichtungen bei größeren Auslenkungen auf, die bei starken Regelabweichungen vorkommen. Gerade bei größeren Auslenkungen geht aber bei der degressiven Rückstellfeder der beschriebenen Art die Geschwindigkeit V zurück.

Die lokale Verbesserung der Genauigkeit ($\overline{V}$) wird ebenfalls aufgrund der vorgenannten Gleichung ermittelt. wobei jedoch $\overline{C}_F$ statt $C_F$ verwendet wird. Es ergibt sich somit folgende Gleichung:

$$\overline{V} = f(x) = \frac{1}{1 - \dfrac{\overline{CF(x)}}{C_w}}$$

Die ermittelten Werte bei unterschiedlichen Federwegen sind in Tabelle 4 angegeben:

Tabelle 4:

| V = f (x), $\overline{V}$ =f(x) | | | | | | |
|---|---|---|---|---|---|---|
| ±x | 0 | 0,2 | 0,3 | 0,4 | 0,5 | 0,6 |
| $\overline{V}$ | 2 | 1,82 | 1,66 | 1,54 | 1,43 | 1,3 |
| V | 2 | 1,6 | 1,33 | 1,16 | 1 | 0,87 |

Um den Durchfluß und die Genauigkeit zu verbessern, ist es auch wichtig, die Spaltweite des beispielsweise als Mischspule ausgebildeten Regelkörpers zu vergrößern. Im folgenden sind die Ergebnisse bezüglich des Durchflusses einerseits und der Genauigkeit und der Geschwindigkeit andererseits als Funktion der gewählten Spaltgröße des Regelkörpers angegeben. Als Ausgangspunkt bzw. als Vergleichsbasis dient hierbei eine bekannte Thermostateinrichtung mit einem Regelkörper mit einem äußeren Durchmesser von $D_N = 25$ mm bei einer typischen Spaltweite von ± 0,3 mm.

Das Verhältnis der vergrößerten Spaltweite (S2) bei der Erfindung gegenüber der Spaltweite der bekannten Thermostateinrichtung (S1) wird mit δ bezeichnet und wie folgt berechnet:

$$\delta = \frac{S2}{S1}$$

Die lokalen spaltbeeinflußten Verbesserungen der Geschwindigkeit (R) und der Genauigkeit ($\overline{R}$) vermindern sich durch den Faktor δ und werden wie folgt berechnet:

$$R = \frac{V}{\delta}$$

bzw.

$$\overline{R} = \frac{\overline{V}}{\delta}$$

Eine Verbesserung der Durchflußrate ergibt sich durch Vergrößerung der Spaltweite. Verglichen mit einer bekannten Thermostateinrichtung mit einem Regelkörper mit einem äußeren Durchmesser $D_N = 25$ mm arbeitet die erfindungsgemäße Thermostateinrichtung mit einem als Metallmembrane ausgebildeten Rückstellfederelement mit einem kleineren Durchmesser von $D_N = 22$ mm des Regelkörpers. Das Verhältnis dieser beiden Außendurchmesser ergibt sich zu

$$\frac{D_D}{D_N} = \frac{22}{25} = 0,88$$

Mit einer Vergrößerung der Spaltweite wird die Verbesserung des Durchflusses v mit folgender Gleichung berechnet:

$$v = \delta \; x \; \frac{D_D}{D_N} = \delta \; x \; 0,88$$

In Tabelle 5 sind nun die Ergebnisse für unterschiedliche Spaltweiten angegeben:

Tabelle 5

| $S\pm$ | 0,3 | 0,4 | 0,45 | 0,5 | 0,6 |
|---|---|---|---|---|---|
| $\delta$ | 1 | 1,33 | 1,5 | 1,67 | 2 |
| $v$ | 0,88 | 1,17 | 1,32 | 1,47 | 1.76 |
| $R_{x=0}$ | 2 | 1,5 | 1,33 | 1,2 | 1 |
| $\overline{R}_{x=s}$ | 1,66 | 1,15 | 1 | 0,85 | 0.63 |
| $R_{x=s}$ | 1,33 | 0,87 | 0,82 | 0,6 | 0,44 |

Wie sich aus der Tabelle 5 ergibt, ist es beispielsweise möglich, bei Erhöhung der Spaltweite S von 0,3 mm auf 0,45 mm folgende Verbesserungen zu erreichen:

+ 50 % Spaltgröße

+ 32 % Durchfluß

+ 33 % Geschwindigkeit und Genauigkeit im Bereich der Mittelstellung.

+ 21 % Stabilität gegen Oszillationen.

Dies ergibt sich aus der Geschwindigkeit einer normalen Thermostateinrichtung mit V = 1 im Verhältnis zu dem Beispiel mit V = 0,82.

Es kann somit festgestellt werden, daß sich durch die Erfindung grundsätzlich in jeglicher Richtung, nämlich Spaltgröße des Regelkörpers, Durchflußmenge, Geschwindigkeit, Genauigkeit und Außendurchmesser des Regelkörpers, ohne weiteres je nach Wunsch Optimierungen vornehmen lassen.

**Patentansprüche**

1. Thermostateinrichtung für eine sanitäre Mischbatterie, mit einem ein Verstellglied aufweisenden, zwischen zwei Grenzlagen (2, 3) bewegbaren Regelkörper und einem mit dem Verstellglied zusammenwirkenden Rückstellfederelement, wobei das Rückstellfederelement im eingebauten Zustand in der Mittelstellung (M) des Regelkörpers auf Druck belastet ist, bei Ausdehnung des Verstellgliedes zusammengedrückt wird und sich bei Zusammenziehung des Verstellgliedes zumindest teilweise entspannt, und wobei die Federkennlinie des Rückstellfederelements ausgehend von der Mittelstellung (M) bei Ausdehnung des Verstellgliedes in einen Belastungsbereich (A) und bei Zusammenziehung des Verstellgliedes in einen Entlastungsbereich (B) übergeht, **dadurch gekennzeichnet,** daß die Federkennlinie (1) des Rückstellfederelements derart ausgebildet ist, daß die Federkraft (F) im Belastungsbereich (A) bei Ausdehnung des Verstellgliedes und gleichzeitiger Zusammendrückung des Rückstellfederelementes ausgehend von der Mittelstellung (M) in Richtung auf die Grenzlage (2) des Belastungsbereichs (A) zunächst zumindest nicht ansteigt.

2. Thermostateinrichtung nach Anspruch 1, dadurch gekennzeichnet, daß die Federkraft (F) des Rückstellelements bei Ausdehnung des Verstellgliedes ausgehend von der Mittelstellung (M) im Belastungsbereich (A) zunächst sinkt.

3. Thermostateinrichtung nach einem der vorhergehenden Ansprüche, dadurch gekennzeichnet, daß die Federkraft (F) des Rückstellfederelements bei Ausdehnung des Verstellgliedes ausgehend von der Mittelstellung (M) im Belastungsbereich (A) degressiv sinkt.

4. Thermostateinrichtung nach einem der vorhergehenden Ansprüche, dadurch gekennzeichnet, daß die Degressivität im Bereich der Mittelstellung (M) am größten ist.

5. Thermostateinrichtung nach einem der vorhergehenden Ansprüche, dadurch gekennzeichnet, daß der Federkennwert (C) des Rückstellfederelements in der Mittelstellung (M) negativ und betragsmäßig am größten ist und daß, vorzugsweise, der Federkennwert (C) in der Mittelstellung (M) etwa - 50 N/mm beträgt.

6. Thermostateinrichtung nach einem der vorhergehenden Ansprüche, dadurch gekennzeichnet, daß die Federkennwerte (C) ausgehend von der Mittelstellung (M) über den Federweg (x) näherungsweise in Form einer Parabel ansteigen.

7. Thermostateinrichtung nach einem der vorhergehenden Ansprüche, dadurch gekennzeichnet, daß die Federkennwerte (C) zu den Grenzlagen (2, 3) hin positiv werden und vorzugsweise im Bereich der Grenzlagen (2, 3) etwa null betragen.

8. Thermostateinrichtung nach einem der vorhergehenden Ansprüche, dadurch gekennzeichnet, daß als Rückstellfederelement eine Metallmembrane verwendet wird.

9. Thermostateinrichtung nach einem der vorhergehenden Ansprüche, dadurch gekennzeichnet, daß das Rückstellfederelement auf etwa 55 N in der Mittelstellung (M) vorgespannt ist.

10. Thermostateinrichtung nach einem der vorhergehenden Ansprüche, dadurch gekennzeichnet, daß das Rückstellfederelement zwischen den Zuläufen von Heiß- und Kaltwasser abdichtet.

11. Mischbatterie mit einer Thermostateinrichtung nach einem der vorhergehenden Ansprüche.

## Claims

1. A thermostat device for a sanitary mixer tap, having a regulating body which comprises an adjusting element and which is movable between two limiting positions (2, 3) and a readjusting spring element which cooperates with the adjusting element, wherein in its installed state the readjusting spring element is under pressure in the middle position (M) of the regulating body, is compressed on the expansion of the adjusting element and is at least partly relieved from stress on the contraction of the adjusting element, and wherein, starting from the middle position (M), the spring characteristic curve of the readjusting spring element extends into a stressed region (A) on the expansion of the adjusting element and extends into a stress relief region (B) on the contraction of the adjusting element, **characterised in that** the spring characteristic curve (1) of the readjusting spring element is designed in such a way that on the expansion of the adjusting element and on the simultaneous compression of the readjusting spring element starting from the middle position (M) in the direction towards the limiting position (2) of the stressed region (A), the spring force (F) in the stressed region (A) firstly at least does not increase.

2. A thermostat device according to claim 1, characterised in that, on the expansion of the adjusting element starting from the middle position (M), the spring force (F) of the readjusting element firstly decreases in the stressed region (A).

3. A thermostat device according to either one of the preceding claims, characterised in that on the expansion of the adjusting element starting from the middle position (M), the spring force (F) of the readjusting spring element decreases degressively in the stressed region (A).

4. A thermostat device according to any one of the preceding claims, characterised in that the rate of degression is highest in the region of the middle position (M).

5. A thermostat device according to any one of the preceding claims, characterised in that the spring characteristic value (C) of the readjusting spring element is negative and its magnitude is greatest in the middle position (M), and that its spring characteristic value (C) in the middle position (M) is preferably about -50 N/mm.

6. A thermostat device according to any one of the preceding claims, characterised in that starting from the middle position (M) the spring characteristic values (C) increase approximately in the form of a parabola over the spring travel (x).

7. A thermostat device according to any one of the preceding claims, characterised in that the spring characteristic values (C) become positive towards the limiting positions (2, 3) and are preferably about zero in the region of the limiting positions (2, 3).

8. A thermostat device according to any one of the preceding claims, characterised in that a metal diaphragm is used as the readjusting spring element.

9. A thermostat device according to any one of the preceding claims, characterised in that the readjusting spring element is prestressed to about 55 N in the middle position (M).

10. A thermostat device according to any one of the preceding claims, characterised in that the readjusting spring element forms a seal between the supplies of hot and cold water.

11. A mixer tap having a thermostat device according to any one of the preceding claims.


**Revendications**

1. Mécanisme thermostatique pour un mélangeur sanitaire, comprenant un corps de réglage mobile entre deux positions limites (2, 3) et présentant un élément variable, et un élément de ressort de rappel coopérant avec l'élément variable, dans lequel l'élément de ressort de rappel à l'état monté, est soumis à une charge de pression dans la position médiane (M) du corps de réglage, est comprimé lors de la dilatation de l'élément variable et subit une détente au moins partielle au moins en partie lors de la contraction de l'élément variable, et dans lequel la courbe caractéristique des ressorts de l'élément de ressort de rappel, à partir de la position médiane (M) lors de la dilatation de l'élément variable, passe dans une zone de charge (A) et, lors de la contraction de l'élément variable, passe dans une zone de détente (B), caractérisé en ce que la courbe caractéristique de flexibilité (1) de l'élément de ressort de rappel est réalisée de telle sorte que la force de ressort (F) dans la zone de charge (A) lors de la dilatation de l'élément variable et de la compression simultanée de l'élément de ressort de rappel à partir de la position médiane (M), dans la direction de la position limite (2) de la zone de charge (A), dans une premier temps au moins n'augmente pas.

2. Mécanisme thermostatique selon la revendication 1, caractérisé en ce que la force de ressort (F) de l'élément de ressort de rappel, lors de la dilatation de l'élément variable à partir de la position médiane (M) dans la zone de charge (A) dans un premier temps, diminue.

3. Mécanisme selon l'une quelconque des revendications précédentes, caractérisé en ce que la force de ressort (F) de l'élément de ressort de rappel, lors de la dilatation de l'élément variable à partir de la position médiane (M) dans la zone de charge (A) subit une diminution dégressive.

4. Mécanisme selon l'une quelconque des revendications précédentes, caractérisé en ce que la dégressivité est maximale dans la zone de la position médiane (M).

5. Mécanisme selon l'une quelconque des revendications précédentes, caractérisé en ce que la caractéristique de flexibilité (C) de l'élément de ressort de rappel dans la position médiane (M) est négative et présente une valeur maximale et en ce que, de préférence, la caractéristique de flexibilité (C) dans la position médiane (M) s'élève à une valeur d'environ -50 N/mm.

6. Mécanisme selon l'une quelconque des revendications précédentes, caractérisé en ce que les caractéristiques de flexibilité (C), à partir de la position médiane (M), s'élèvent approximativement sous la forme d'une parabole, le long de la course élastique (x).

7. Mécanisme selon l'une quelconque des revendications précédentes, caractérisé en ce que les caractéristiques de flexibilité (C) deviennent positives en direction des positions limites (2, 3) et de préférence dans la zone des positions limites (2, 3) prennent une valeur proche de zéro.

8. Mécanisme selon l'une quelconque des revendications précédentes, caractérisé en ce qu'on utilise une membrane métallique à titre d'élément de ressort de rappel.

9. Mécanisme selon l'une quelconque des revendications précédentes, caractérisé en ce que l'élément de ressort de rappel est soumis à une précontrainte d'environ 55 N dans la position médiane (M).

10. Mécanisme selon l'une quelconque des revendications précédentes, caractérisé en ce que l'élément de ressort de rappel procure un effet d'étanchéification entre les courants d'amenée de l'eau chaude et de l'eau froide.

11. Mélangeur muni d'un mécanisme thermostatique selon l'une quelconque des revendications précédentes.

Fig. 1

Fig. 2

$\overline{V}=f(x)$

$V=f(x)$

$\overline{V}, V$

x[mm]

Fig. 3